# EUROPÄISCHE PATENTSCHRIFT

(11) **EP 1 212 824 B1**
(45) Veröffentlichungstag und Bekanntmachung des Hinweises auf die Patenterteilung: **14.09.2011**
(21) Anmeldenummer: 01951388.6
(22) Anmeldetag: 15.06.2001
(51) Int. Cl.: H02K 5/24, F16F 15/04

(54) **VORRICHTUNG ZUR SCHWINGUNGSISOLIERENDEN HALTERUNG EINES ELEKTROMOTORS**
ANTI-VIBRATIONAL HOLDING DEVICE FOR AN ELECTRIC MOTOR
DISPOSITIF DE FIXATION ANTIVIBRATILE D'UN MOTEUR ELECTRIQUE

(30) Priorität: 19.06.2000 DE 10029188; 13.06.2001 DE 10128535
(43) Veröffentlichungstag der Anmeldung: 12.06.2002
(73) Patentinhaber: ROBERT BOSCH GMBH, 70442 Stuttgart (DE)
(72) Erfinder: WHITE, Robert, Roslindale Massachusetts 02131 (US)
(86) Internationale Anmeldenummer: PCT/DE2001/002232
(87) Internationale Veröffentlichungsnummer: WO 2001/099256

(56) Entgegenhaltungen:
- FR-A- 2 435 148
- FR-A- 2 732 524
- FR-A- 2 740 625
- US-A- 4 200 257

## Beschreibung

Die Erfindung geht aus von einer Vorrichtung zur schwingungsisolierenden Halterung eines Elektromotors, insbesondere eines Gebläsemotors nach dem Oberbegriff des unabhängigen Anspruchs.

Gebläsemotoren für Heiz- und Klimagebläseanlagen, die beispielsweise in Fahrzeugen verwendet werden, sind in der Regel gegenüber dem Fahrzeug schwingungstechnisch entkoppelt, um eine Übertragung des Körperschalls des Motors beziehungsweise der Gebläseeinheit auf die Karosserie und damit in den Innenraum des Fahrzeuges zu reduzieren.

Gängige Befestigungsmethoden für derartige Motoren bestehen darin, den kompletten Motor in ein Kunststoffgehäuse oder ein Gehäuse aus Metall zu schieben, an dem ein Flansch zur Verbindung mit der Klimaanlage vorgesehen ist. Normalerweise wird Gummi in Form von entsprechend geformten Gummielementen zwischen den Motor und das Motorgehäuse oder in den Flansch eingelegt, um Schwingungsanregungen der Klimaanlage oder der Karosserie zu dämpfen und störende Geräusche für den Fahrer oder seine Mitfahrer im Innenraum des Fahrzeuges zu unterdrücke.

Eine Hauptquelle der Schwingungen von DC-Motoren ist die Kommutierung. Die Kommutierung entsteht, wenn die Kupferwicklungen des Ankers während des Betriebes des Motors Strom führen. Während jeder Umdrehung der Ankerwelle wird Strom einmal in jede Richtung durch die vorhandenen Wicklungen des Motors geführt. Die Stromführung in den Wicklungen erzeugt unter dem Einfluss eines Permanentmagnetfeldes eine Reaktion, die als Drehmoment-Impuls weitergegeben wird. Die mit zwei multiplizierte Anzahl der Wicklungen ergibt unter Berücksichtigung der Drehzahlrate die Frequenz der Kommutierung und damit die Anzahl der vom Motor übertragenden Drehmoment-Impulse pro Zeiteinheit.

Die Kommutierung überträgt daher entsprechend der Schwankung beziehungsweise entsprechend der Veränderungen der Drehmoment-Impulse torsionale Vibrationen in die Heizbeziehungsweise Klimagebläseanlage. Wenn Gummi beziehungsweise entsprechende Entkopplungselemente aus Gummi zwischen Flansch und Motorgehäuse eingelegt werden, ist gewährleistet, dass geringere torsionale Vibrationsimpulse in die Heiz- und Klimagebläseanlage übertragen werden. Der Gummi ist ein mechanischer Filter, der überhöhte Vibrationen beziehungsweise das Eindringen erhöhter Vibrationen in der Heiz- und Klimaanlage verhindert und damit zu einer teilweisen mechanischen Entkopplung der Bauteile führt.

Im Praxiseinsatz befinden sich etliche Möglichkeiten, die Gummi- beziehungsweise Entkopplungselemente aus Gummi zwischen dem Gehäuseflansch beziehungsweise zwischen Motor und Motorgehäuse einzusetzen, um eben diese Vibrationimpulse zu dämpfen.

So offenbart beispielsweise die DE 43 34 124 A1 eine Vorrichtung zum Aufnehmen eines Elektromotors, die eine besonders schwingungsarme und damit geräuschdämpfende Wirkung dadurch erzielt, dass zwischen den Innenwänden dieser Aufnahmevorrichtung und den diesen zugewandten Aussenwänden des Motorgehäuses wenigstens ein elastisches Dämpfelement angeordnet ist, das sich an den einander zugewandten Wänden der Aufnahmevorrichtung und des Motorgehäuses abstützt.

Diese elastischen Dämpfelemente, die in einer bevorzugten Ausführungsform der Vorrichtung der DE 43 34 124 A1 entsprechend geformte Gummielemente sind, bedeuten einen erhöhten Montage und Materialaufwand, der die Kosten einer solchen Vorrichtung unnötigerweise erhöht. Im Speziellen stellen Gummielemente beziehungsweise Dämpfungselemente aus Gummi für die Montagefertigungslinien einer industriellen Produktion ein Problem dar, da diese nur durch taktzeitaufwendige Handhabungsprozesse in die entsprechenden Vorrichtungen zu integrieren sind.

Aus der US 4,063,060 ist eine Haltevorichtung für einen Elektromotor bekannt, bei der drei drehflexible blattfederartige Stahlhaltearme vorgesehen sind, die um gleiche Umfangswinkel zueinander versetzt, strahlenförmig zwischen Elektromotor und Aufnahmegehäuse gespannt sind und jeweils mit ihrem einen Ende unter Zwischenschaltung elastischer Puffer an einem mit dem Aufnahmegehäuse fest verbundenen Einlasskragen angebunden sind.

Durch die in einer Ebene erfolgende Dreipunktaufhängung des Elektromotors der US 4,063,060 und die geringe Federkonstante der Haltearme in Torsionsrichtung führt dieser Motor relativ große Schwingungen und Kippbewegungen aus, die in den elastischen Elementen, insbesondere in den Puffern, Scherkräfte hervorrufen, die schnell zu Materialermüdung und zu Beschädigungen führen. Die Lebensdauer dieser bekannten Haltevorrichtung ist daher stark begrenzt und nicht ausreichend für den Einsatz in Kraftfahrzeugen, bei denen die elastischen Elemente auch noch Schwingungen aufnehmen müssen, die durch Fahrbahnstösse von aussen an dem Elektromotor hervorgerufen werden.

Die FR-A-2732524 offenbart eine Vorrichtung zur schwingungsisolierenden Halterung eines Elektromotors entsprechend dem Oberbegriff des Anspruchs 1, wobei die Speichen quaderförmig ausgebildet sind. Zudem sind die Speichen in axialer Richtung der Welle des Motors als solche nicht weich, sondern starr, so dass sie nicht selbst etwaige torsionale Drehmoment-Impulse dämpfen können. Zu diesem Zweck sind gesonderte Dämpfungselemente vorgesehen, in die die starren Köpfe der Speichen eingreifen, um tangentiale, radiale und axiale Kräfte des Motors aufzunehmen bzw. zu dämpfen.

### Vorteile der Erfindung

Die erfindungsgemäße Vorrichtung zur schwingungsisolierenden Halterung eines Elektromotors mit den Merkmalen des unabhängigen Anspruchs hat demgegenüber den Vorteil, dass die schwingungsisolierenden Elemente Kunststoffspeichen sind, die zum Einem dafür sorgen, dass der Elektromotor schwingungstechnisch von einem zweiten Gehäuseteil, das gleichzeitig als Motorflansch zur Befestigung des Elektromotors im Fahrzeug dient, entkoppelt ist. Zum Zweiten übernehmen die erfindungsgemäßen, schwingungsisolierenden Kunststoffspeichen zusätzlich die Aufgabe die beiden Gehäuseteile - Motorhalterung und Motorflansch - miteinander zu verbinden.

Die erfindungsgemäßen Kunststoffspeichen stellen in ihrer Funktion einen mechanischen Filter dar, der die störenden Drehmoment-Impulse des Motors von der Heiz- und Klimagebläseanlage entkoppelt, so dass weniger Vibrationen in die Anlage übertragen werden und der Geräuschpegel reduziert wird. Dieses Design hat den Vorteil, dass die Kunststoffspeichen als Federelemente wirken, ohne dass Gummi oder Gummielemente zur Dämpfung der auftretenden Schwingungen verwendet werden müssen.

Vorteilhafte Ausführungen der erfindungsgemäßen Vorrichtung ergeben sich aus den in den Unteransprüchen aufgeführten Merkmalen.

In einer vorteilhaften Ausführungsform der erfindungsgemäßen Vorrichtung bestehen die Gehäuseteile aus Kunststoff. Diese Ausführungsform ermöglicht eine deutliche Gewichtsreduzierung für die Vorrichtung zur Halterung des Elektromotors. Insbesondere lassen sich die Gehäuseteile im Spritzgussverfahren herstellen, so dass es in einfacher Weise möglich ist zusätzliche Komponenten und Trägerelemente am Gehäuse auszubilden. Auf diese Art kann beispielsweise ein Wellenlager direkt umspritzt werden, oder es kann eine Halterung für die Bürsten oder entsprechende Drosselspulen direkt an der Motorhalterung ausgeformt werden. Auch kann dass Motorgehäuse direkt in Kunststoff ausgebildet sein.

Damit kann die gesamte erfindungsgemäße Vorrichtung inklusive der Entkopplungselemente aus nahezu einem Werkstoff gefertigt werden, was zu einer deutlichen Vereinfachung des Herstellungsprozesses derartiger Motorhalterungsvorrichtungen führt

Eine einfach zu realisierende und besonders vorteilhafte Ausführungsform ergibt sich, wenn die schwingungsisolierenden Kunststoffspeichen direkt an dem entsprechenden ersten Gehäuseteil der Vorrichtung angespritzt werden und somit einstückig mit diesem ausgebildet sind. Zusätzlich Verbindungsmittel und der problembehaftete Übergang auf unterschiedliche Werkstoffe sind somit nicht notwendig.

Eine gute schwingungsisolierende Wirkung der Kunststoffspeichen ergibt sich, wenn diese flächenartig ausgeführt sind. So zeigen trapezförmige Kunststoffspeichen, bei denen mit zunehmendem radialen Abstand vom Motor die axiale Ausdehnung der Speichenfläche kleiner wird sehr gute Dämpfungseigenschaften.

Die Dämpfungsmerkmale der erfindungsgemäße schwingungsisolierenden Motorhalterung lassen sich im Einzelnen beispielsweise durch die Anzahl und die genaue Formgebung, sowie durch die Dicke, die Höhe, die radiale Länge sowie die Konizität der Kunststoffspeichen variieren und auf die jeweiligen Erfordernisse verschiedener Motortypen und Verwendungszwecke anpassen. So ergibt sich beispielsweise eine optimale Anzahl von Kunststoffspeichen im Bereich von drei bis sechs Stück, die über den Umfang eines ersten Gehäuseteils in dem beispielsweise der Polring und Magnete des Elektromotors befestigt sind, verteilt sind.

Kunststoffspeichen, die in ihrer Querrichtung, das heisst in axialer Richtung zum Motor, weich gestaltet sind, ermöglichen eine deutlich verbesserte Entkopplung der torsionalen Drehmoment- Vibrationsimpulse und verhindern somit deren Eintrag in die Heiz- und Klimagebläseanlage beziehungsweise in die Karosserie des Fahrzeugs. Dabei wird die Steifigkeit der Kunststoffspeichen in Querrichtung so gewählt, dass, wenn der Motor auf einer niederfrequenten Drehzahl läuft, die torsionalen Drehmoment-Impulse durch die Kunststoffspeichen gegenüber dem Motorflansch und den weiteren anhängigen Teilen entkoppelt werden.

Eine weitere vorteilhafte Ausgestaltung erfährt die erfindungsgemäße Vorrichtung, wenn die Kunststoffspeichen an ihren, dem Motor abgewandten, radialen Enden jeweils zusätzliche Dämpfungselemente aufweisen, die im Wesentlichen rechtwinklig zur radialen Richtung der Kunststoffspeichen stehen.

Durch entsprechende Konfiguration dieser zweiten Dämpfungselemente an den Enden der Kunststoffspeichen ist es möglich, die gesamte Dämpfungscharakteristik der Speichenelemente positiv zu beeinflussen.

Diese kleineren, rechtwinklig zur radialen Hauptspeichenrichtung stehenden Dämpfungs- beziehungsweise Federelemente sorgen für eine zusätzliche Dämpfung der Schwingungsanregungen bei höheren Frequenzen. Die Filterwirkung des erfindungsgemäßen Motorgehäuses kann auf diese Art über einen breiteren Frequenzbereich der ungewollten Schwingungen erweitert werden. Werden diese Federelemente ebenfalls in Kunststoff ausgeführt, so lassen sich diese direkt zusammen mit den radialen Speichenelementen und dem ersten Gehäuseteil ausformen, was einen Materialmix vermeidet und somit eine deutliche Vereinfachung des Herstellungsprozesses bedeutet.

Über ihre genaue Größe und Form lässt sich die Dämpfungscharakteristik dieser zusätzlichen Dämpfungselemente und damit der gesamten erfindungsgemäßen Vorrichtung optimieren. Eine vorteilhafte Ausformung dieser zweiten Dämpfungselemente ergibt sich, wenn diese zumindest über die gesamte axiale Länge des motorabgewandten, radialen Endes der Kunststoffspeichen verlaufen, so dass ein gleichmässiger Übergang der beiden Dämpfungselemente erreicht wird.

Auf diese Weise ist es ebenfalls möglich, die Dämpfungselemente an Ihrem, dem zweiten Gehäuseteil zugewandten axialen Ende mit einem beziehungsweise auch mehreren Zapfen zu versehen, die in entsprechend ausgeformte Vertiefungen in der Ausnehmung des zweiten Gehäuseteils eingreifen. Diese Zapfen werden im zweiten Gehäuseteil befestigt und sorgen so für eine stabile Verbindung der beiden Gehäuseteil, die aber trotzdem die gewünschte, schwingungstechnische Entkopplung der beiden Bauteile

(Gehäuseteile) gewährleistet. Beispielsweise können die Zapfen an den Dämpfungselementen im zweiten Gehäuseteil mittels Ultraschall vernietet werden, was eine einfache und sichere Befestigungsmethode darstellt. Selbstverständlich sind auch alle anderen, dem Fachmann bekannten Verbindungsmöglichkeiten, wie beispielsweise Verkleben, Reibschweissen oder auch Verschmelzen denkbar.

Zur weiteren Erhöhung der Verbindungsfestigkeit können in einer vorteilhaften Ausführungsform der erfindungsgemäßen Vorrichtung die im zweiten Gehäuseteil vorgesehenen, die Kunststoffspeichen des ersten Gehäuseteils aufnehmenden, Ausnehmungen in axialer Richtung, das heisst in Richtung der Motorwelle konisch zulaufen und zwar in der Art, dass sich die Breite dieser Ausnehmungen in Richtung zunehmendem Abstands vom ersten Gehäuseteil verkleinert. Auf diese Weise wird erreicht, dass die Kunststoffspeichen an ihrer dem zweiten Gehäuseteil zugewandten Seite in die Ausnehmungen des zweiten Gehäuseteils verklemmt werden können. Dies sorgt für eine größere Auflagefläche zwischen den beiden Gehäuseteilen und erhöht somit die mechanische Stabilität der erfindungsgemäßen Vorrichtung.

Eine weitere Verbesserung der Dämpfungseigenschaften ergibt sich für die erfindungsgemäße Vorrichtung, wenn die Dämpfungselemente, die sich an den radialen Enden der Kunststoffspeichen befinden von Gummielementen umgriffen werden. Vorteilhafterweise kommen diese Gummielemente zwischen den Dämpfungselementen der Kunststoffspeichen und den Wänden der Ausnehmungen des zweiten Gehäuseteils zu liegen.

### Zeichnung

Weitere Vorteile der erfindungsgemäßen Vorrichtung sind ihrer Beschreibung und der Zeichnung zu entnehmen.

In der Zeichnung sind Ausführungsbeispiele der erfindungsgemäßen Vorrichtung dargestellt. Die Beschreibung, die Zeichnungen und die Ansprüche enthalten zahlreiche Merkmale in Kombination. Ein Fachmann wird diese Merkmale auch einzeln betrachten und zu sinnvollen weiteren Kombinationen zusammenfassen.

Es zeigen:
Figur 1 eine schematische Aufsicht auf ein erstes Gehäuseteil der erfindungsgemäßen Vorrichtung gemäß eines ersten Ausführungsbeispiels,
Figur 2 einen Schnitt entlang der Linie AA in Figur 1,
Figur 3 eine perspektivische Darstellung eines Ausführungsbeispiels einer Kunststoffspeiche,
Figur 4 ein Ausführungsbeispiel einer Kunststoffspeiche mit einem an dessen radialem Ende angebrachten, zusätzlichen Gummielement,
Figur 5 eine Aufsicht in schematischer Darstellung auf das in das zweite Gehäuseteil eingesetzte erste Gehäuseteil der erfindungsgemäßen Vorrichtung gemäß des ersten Ausführungsbeispiels,
Figur 6 ein zweites, alternatives Ausführungsbeispiel eines ersten Gehäuseteils der erfindungsgemäßen Vorrichtung,
Figur 7 eine weitere Ansicht des zweiten Ausführungsbeispiels des ersten Gehäuseteils der erfindungsgemäßen Vorrichtung gemäß Figur 6,
Figur 8 eine Explosionszeichnung eines Ausführungsbeispiels der erfindungsgemäßen Vorrichtung und
Figur 9 eine perspektivische Darstellung der ineinandergesteckten, ersten und zweiten Gehäuseteile der erfindungsgemäßen Vorrichtung nach dem zweiten Ausführungsbeispiel.

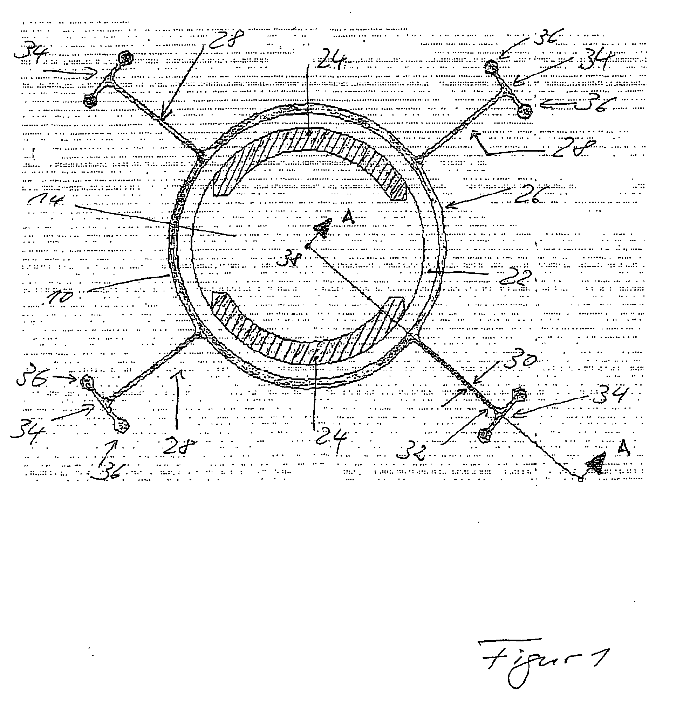

In der Figur 1 ist ein erstes Gehäuseteil 10 der erfindungsgemäßen Vorrichtung 12 schematisch dargestellt. Das Gehäuseteil 10 nach dem Ausführungsbeispiel der Figur 1 hat in etwa zylindrische Form und weist an seinen axialen Enden jeweils eine Öffnung 14 beziehungsweise 16 auf, durch die eine Welle 18 eines Elektromotors 20 aus dem Gehäuse der Vorrichtung geführt werden kann . Die Öffnungen 14 beziehungsweise 16 können durch entsprechende Deckel, die auch aus einem anderen Material, als das des ersten Gehäuseteils 10, bestehen können, verschlossen werden. Diese Deckel können beispielsweise einen zum Motor gehörigen Bürstenhalterteil oder auch ein Lager für die Welle des Elektromotors oder weitere Motorbauteile aufnehmen.

In das erste Gehäuseteil 10 eingesetzt ist ein Polring 22 sowie zwei Segmente eines Permanentmagneten 24 des Elektromotors 20 der Vorrichtung 12. Neben den hier dargestellten zweisegmentigen Permanentmagneten 24 können selbstverständlich auch mehrpolige Magnete in der erfindungsgemäßen Vorrichtung 12 eingesetzt werden.

Am äusseren Umfang 26 dieses ersten Gehäuseteils 10 sind Speichen 28 - in diesem Ausführungsbeispiel sind es vier Speichen - angebracht, die radial von der Gehäuseoberfläche 26 weg weisen. Die Speichen 28 sind flächenartig ausgeformt, das heisst, dass ihre Dicke 30 deutlich geringer ist, als die entsprechenden radialen beziehungsweise axialen Ausdehnungen der Speichen 28 . Diese flächenartige Form der Speichenelemente 28 ermöglicht in vorteilhafter Weise eine Entkopplung von torsionalen Schwingungen des ersten Gehäuseteils 10, da eine entsprechende Verformung (Torsion) der Speichen 28 möglich ist.

Ein typisches Maß für die Dicke 30 der Speichen liegt in der Größenordnung von 1mm, wohingegen die radiale Länge der Speichen um eine Größenordnung höher liegt und typischerweise in einem Bereich von einem bis fünf Zentimeter variiert.

Die Speichen 28, die der besseren Verformbarkeit und damit der besseren Dämpfung wegen aus Kunststoff bestehen, sind im Ausführungsbeispiel fest und einstückig mit dem ersten Gehäuseteil 10 verbunden und in ihrer Querausdehnung, das heisst in Richtung der Motorachse weich ausgestaltet. Die Steifigkeit der Kunststoffspeichen 28 wird je nach Motormodell und Anwendungsbereich derart gewählt, dass, wenn der Motor 20 auf der niedrigsten Drehzahl läuft, die torsionalen Drehmoment-Impulse des Motors von den Kunststoffspeichen 28 gedämpft und entkoppelt werden. Die Anzahl der Speichen 28 kann in verschiedenen Ausführungsbeispielen der erfindungsgemäßen Vorrichtung 12 variieren und ist nicht auf die in Figur 1 offenbarte Anzahl begrenzt.

An ihrem dem Gehäuse 10 abgewandten, radialen Ende 32 weisen die Speichen 28 zusätzliche Dämpfungselemente 34 auf, die rechtwinklig zu der radialen Richtung der Kunststoffspeichen 28 angeordnet sind. Neben den Kunststoffspeichen 28 bilden diese Dämpfungselemente 34 einen zweiten mechanischen Filter, der die Schwingungen des Elektromotors 20 von der Karosserie eines Fahrzeuges, in dem die erfindungsgemäße Vorrichtung beispielsweise untergebracht ist, entkoppelt.

Während die Kunststoffspeichen mechanische Federelemente sind, die hauptsächlich für eine torsionale Entkopplung sorgen, ermöglichen die zusätzlichen Dämpfungselemente 34 an den radialen Enden 32 der Kunststoffspeichen 28 auch eine radiale Entkopplung von auftretenden Motorschwingungen. Die Dämpfungselemente 34 können einstückig mit den Kunststoffspeichen 28 ausgebildet sein, oder auch über andere, dem Fachmann bekannte Maßnahmen mit den Speichen 28 verbunden sein. Durch die spezielle Verbindung der Dämpfungselemente 34 mit den Kunststoffspeichen 28 und deren Verbindung mit dem ersten Gehäuseteil 10 der erfindungsgemäßen Vorrichtung 12 lassen sich die Dämpfungseigenschaften des mechanischen Filters, den die erfindungsgemäße Vorrichtung 12 in ihrer Funktion unter Anderem auch darstellt, optimieren.

An der Unterseite der Dämpfungselemente 34 befinden sich Verbindungsmittel 36 , die die Kunststoffspeichen 28 und damit das erste Gehäuseteil 10 mit einem zweiten Gehäuseteil fest verbinden können.

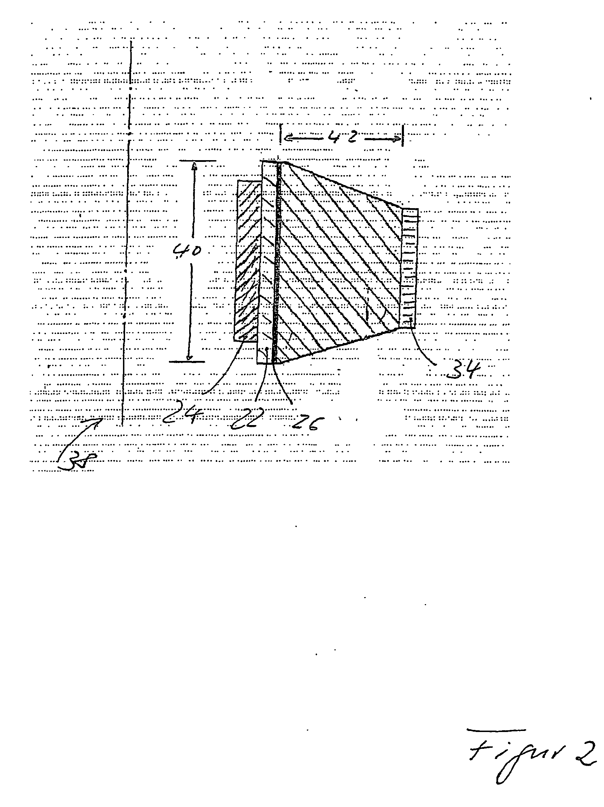

In Figur 2 ist eine schematische Darstellung der Kunststoffspeichen 28, mit den an ihren radialen Enden 32 angebrachten Dämpfungselementen 34, wie sie sich entlang eines Schnittes AA in Figur 1 ergibt, wiedergegeben. Ebenfalls in Figur 2 eingezeichnet ist eine zentrale Achse 38, die der Drehachse einer Motorwelle der erfindungsgemäßen Vorrichtung 12 entspricht.

Die Bezugszahl 24 bezeichnet auch in Figur 2 einen im ersten Gehäuseteil 10 angeordneten Magneten und 22 kennzeichnet den Polring des Elektromotors 20 der Vorrichtung 12. Als wichtige Parameter der Kunststoffspeichen 28 sind deren Höhe 40, das heisst die Ausdehnung in Richtung der Motorachse, die radiale Länge 42, die Dicke 30 der Kunststoffspeichen 28 und deren Konizität, das heisst die Abnahme der Höhe 40 der Speichen 28 mit zunehmendem radialen Abstand von der Wandung 26 des ersten Gehäuseteils 10 anzusehen.

Über diese Parameter und noch einige weitere lassen sich die Dämpfungseigenschaften der Kunststoffspeichen 28 den jeweiligen Erfordernissen einer speziellen Anwendung anpassen.

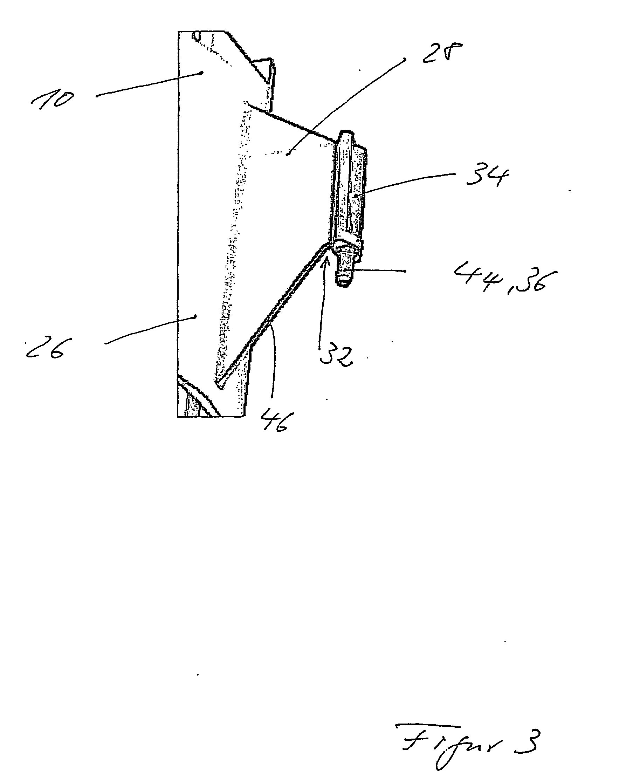

Figur 3 zeigt eine alternative Ausgestaltung der erfindungsgemäßen Kunststoffspeichen 28 in perspektivischer Darstellung. Die dargestellte Kunststoffspeiche 28 ist einstückig mit dem ersten Gehäuseteil 10 ausgeformt und hat ein im Wesentlichen trapezartige Form, mit abnehmenden Höhe, dass heisst axiale Ausdehnung, bei zunehmenden radialem Abstand von der Wandung 26 des ersten Gehäuseteils 10.

Am radialen Ende 32 der Kunststoffspeiche 28 ist ein zusätzliches Dämpfungselement 34 ebenfalls einstückig und im Wesentlichen senkrecht zur radialen Richtung der Kunststoffspeiche 28 mit dieser verbunden. Das Material des Dämpfungselementes 34 kann sich von dem Material der Kunststoffspeichen unterscheiden, um auch auf diesem Wege eine Anpassung der Dämpfungskonstanten der Filterfunktion der erfindungsgemäßen Vorrichtung 12 zu erreichen.

An seinem, einem zweiten Gehäuseteil zugewandten - in Abbildung 3 ist es das untere - Ende weist dieses Dämpfungselement 34 einen Zapfen 44 auf, der als Verbindungsmittel 36 zu weiteren Gehäuseteilen dient.

Die Verbindungszapfen 44 zur Befestigung des ersten Gehäuseteils 10 an einem zweiten Gehäuseteil der erfindungsgemäßen Vorrichtung 12 kann alternativerweise auch direkt an der Unterseite 46 der Kunststoffspeichen 28 ausgebildet sein, da die Dämpfungselemente 34 an den Kunststoffspeichen 28 eine optionale, zusätzliche Dämpfungskomponente darstellen, auf deren Nutzung in anderen Ausführungsbeispielen der Erfindung auch verzichtet werden kann.

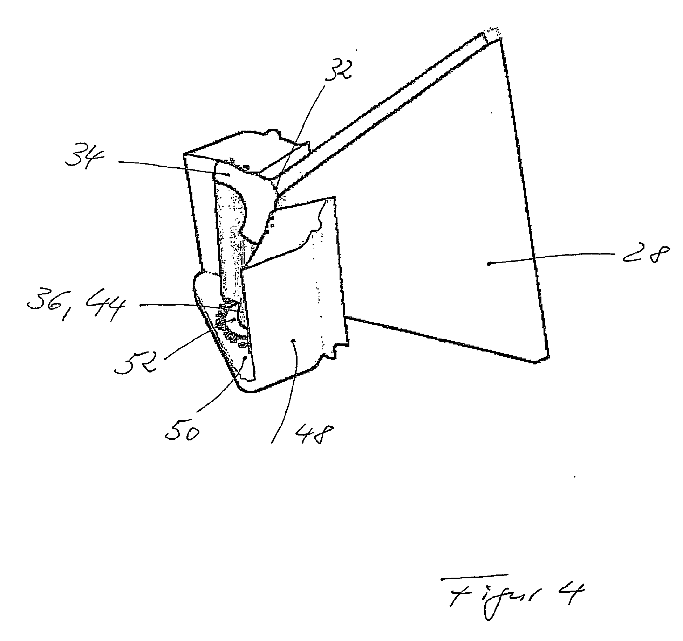

Figur 4 zeigt ein weiteres Ausführungsbeispiel der erfindungsgemäßen Kunststoffspeichen 28 mit zusätzlichen Dämpfungselementen 34 an den radialen Enden 32 der Speichen 28. Das in Figur 4 dargestellte Dämpfungselement 34 ist in Umfangsrichtung des ersten Gehäuseteils 10 leicht nach aussen gekrümmt, aber im Wesentlichen senkrecht zur radialen Richtung der Kunststoffspeichen 28 angeordnet. Die Speichen 28 dieses Ausführungsbeispiels beziehungsweise deren radiales Ende 32 sowie die sich daran anschließenden Dämpfungselemente 34 sind von einem gemeinsamen, zusätzlichen Gummielement 48 umgeben. Dieses Gummielement 48 weist an seiner Unterseite 50 eine Öffnung 52 auf, durch die der jeweilige Verbindungszapfen 44 der Speiche 28 zur Befestigung mit einem zweiten Gehäuseteil durchgeführt werden kann. Das zusätzliche, dämpfende Gummielement 48 kommt jeweils zwischen der Kunststoffspeiche 28 des ersten Gehäuseteils 10 und einer Wandung einer diese Speiche 28 aufnehmenden Ausnehmung eines zweiten Gehäuseteil zu liegen.

Ein solches Gummielement 48 entspricht einem dritten, die Schwingungen des Motors 20 entkoppelnden, Filter, der in seiner Wirkung parallel zu den mechanischen Schwingungsfiltern, den die Kunststoffspeichen 28 mit den Dämpfungselemente 34 an ihrem radialen Ende 32 darstellen, angeordnet ist.

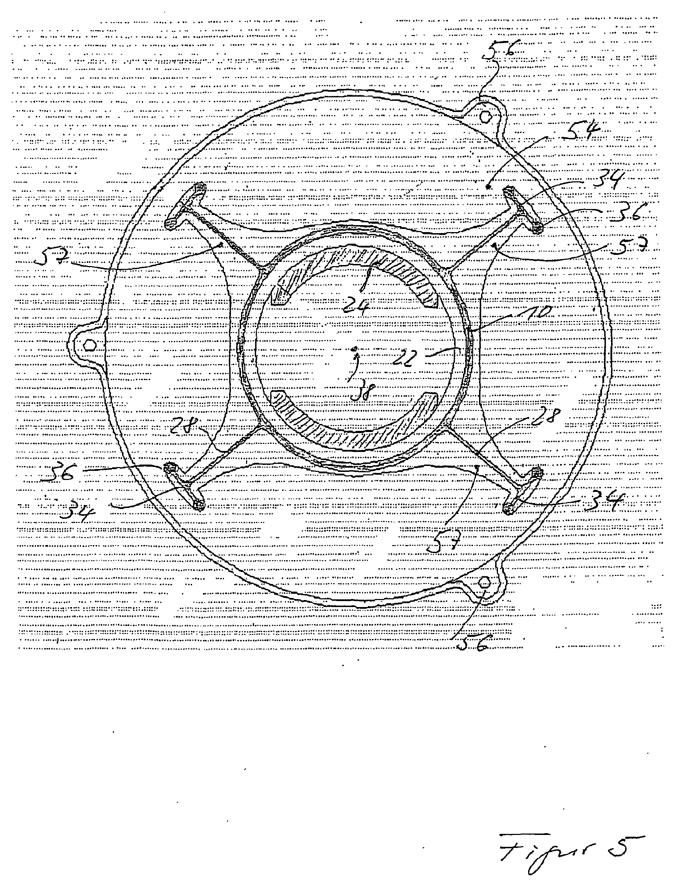

Figur 5 zeigt eine vereinfachte schematische Zeichnung, die das erste Gehäuseteil 10 mit den anhängigen Kunststoffspeichen 28 zeigt, wie es in ein zweites Gehäuseteil 54 der erfindungsgemäßen Vorrichtung 12 eingesetzt ist. Dieser zweite Gehäuseteil 54 ist in Form eines Motorflansches ausgebildet und trägt Vorrichtungen 56, mit denen der Motorflansch 54 und damit die gesamte erfindungsgemäße Vorrichtung 12 an einem Trägerelement beispielsweise einer Fahrzeugheizungs- oder Klimaanlage angebracht werden kann.

Die Kunststoffspeichen 28 des ersten Gehäuseteils 10 kommen dabei in Ausnehmungen 57 des zweiten Gehäuseteil 54 der erfindungsgemäßen Vorrichtung 12 zum liegen. Über die zapfenförmigen Verbindungselemente 36 an der Unterseite der Dämpfungselemente 34 der Speichen 28 ist das erste Gehäuseteil 10 mit dem zweiten Gehäuseteil 54 fest verbunden.

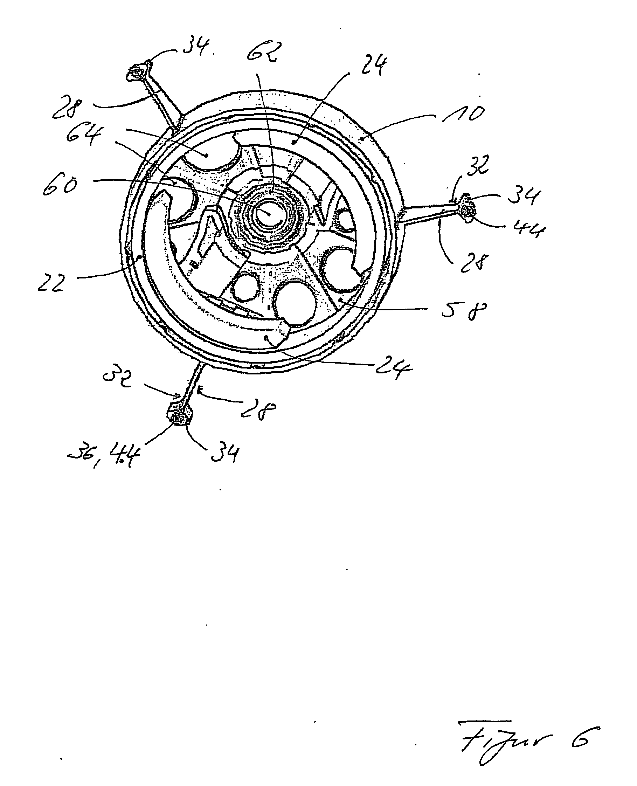

Figur 6 zeigt eine perspektivische Darstellung eines zweiten Ausführungsbeispiels eines ersten Gehäuseteils 10 der erfindungsgemäßen Vorrichtung 12. Die Blickrichtung ist aus Richtung des aufnehmenden, zweiten Gehäuseteils gewählt. In diesem Ausführungsbeispiel trägt das erste Gehäuseteil 10 drei Kunststöffspeichen 28, an deren, dem Gehäuse abgewandten radialen Ende 32 Dämpfungselemente 34 analog denen in Figur 3 dargestellten, angebracht sind. Ebenfalls erkennbar in Figur 6 ist jeweils ein Verbindungszapfen 44 am unteren Ende der Dämpfungselemente 32 der Kunststoffspeichen 28.

In dem ersten Gehäuseteil 10 des in Figur 6 dargestellten Ausführungsbeispiels der erfindungsgemäßen Vorrichtung 12 sind der Polring 22 und zwei Magnetsegmente 24 zu erkennen. Ebenfalls in der Durchsicht des Gehäuses 10 erkennbar, ist ein Gehäusedeckel 58 des ersten Gehäuseteils 10, der in diesem Ausführungsbeispiel einstückig mit diesem verbunden ist. Der Deckel 58 weist eine zentrale Öffnung 60 auf, in die ein Lager 62 für eine Welle 18 eines Elektromotors 20 der Vorrichtung 12 eingebracht ist. Weitere sichtbare Öffnungen 64 im Deckel 58 dienen der Durchführung von Motorkomponenten sowie der Kühlung des Elektromotors 20.

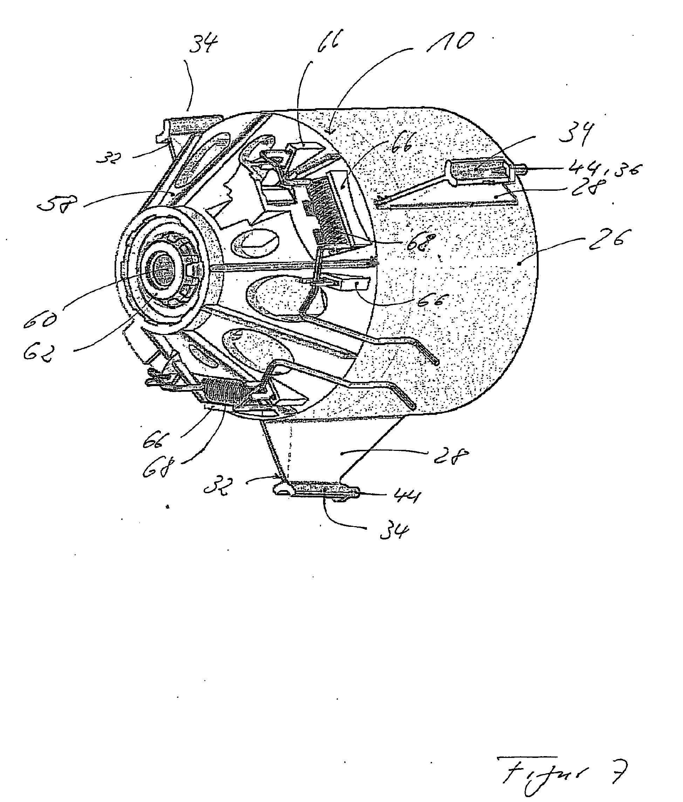

In Figur 7 ist das Ausführungsbeispiel der Figur 6 nochmals zu Verdeutlichung in einer anderen, ebenfalls perspektivischen Darstellung gezeigt. Deutlich erkennbar sind die drei, am äusseren Umfang 26 eines ersten Gehäuseteils 10 angebrachte Kunststoffspeichen 28, mit an ihrem radialen Enden 32 vorgesehenen zusätzlichen Dämpfungselementen 34 und den Verbindungszapfen 44 zur Befestigung dieses Gehäuseteils 10 an einem weiteren Gehäuseteil. Der in diesem Ausführungsbeispiel ebenfalls einstückig ausgebildete Gehäusedeckel 58 weist an seiner Aussenseite diverse Befestigungselemente 66 für Komponenten des Elektromotors 20 der erfindungsgemäßen Vorrichtung 12 auf. Eingezeichnet in Figur 7 sind beispielhafterweise lediglich zwei Drosselspulen 68 für die elektrische Versorgung der Motors 20.

Ebenfalls deutlich zu erkennen in dieser Darstellung eines Ausführungsbeispiels der erfindungsgemäßen Vorrichtung 12 ist die zentrale Öffnung 60, in die ein Lager 62 zur Halterung der Motorwelle 18 eingebracht ist.

Dieses erste Gehäuseteil 10 wird, bei eingesetztem Elektromotor 18 in ein zweites Gehäuseteil 54, welches auch als Motorflansch dient, in axialer Richtung eingeschoben, so dass der zweite Gehäuseteil 54 den ersten Teil 10 radial vollständig umgreift und axial partiell überlappt.

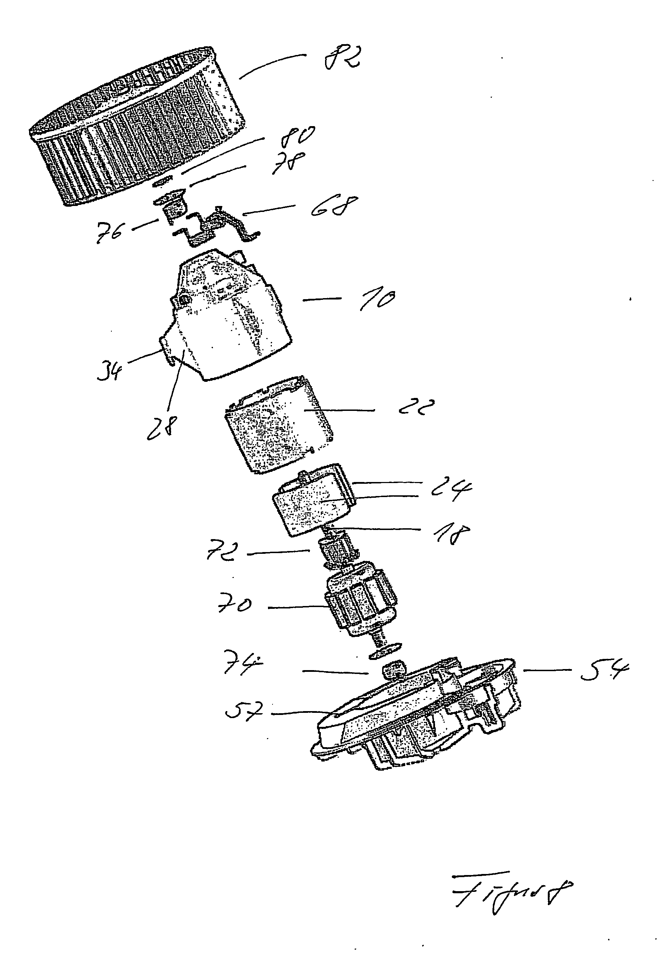

Das Zusammenspiel der beiden Gehäuseteile dieses Ausführungsbeispiels der erfindungsgemäßen Vorrichtung 12 ist in einer exemplarischen Explosionszeichnung in Figur 8 dargestellt. Figur 8 zeigt die wesentlichen Bauteile eines Ausführungsbeispiels der erfindungsgemäßen Vorrichtung 12 in der Übersicht. Zwischen einem als Motorflansch dienenden zweiten Gehäuseteil 54 und einem als Bürstenträger- und Lagerdeckeleinheit ausgebildeten ersten Gehäuseteil 10 sind die wesentlichen Bestandteile eines Elektromotors 20 der Vorrichtung 12 dargestellt. Der erste Gehäuseteil 10 trägt einen Polring 22 und zwei Magnetsegmente 24 des Elektromotors 20. Ebenfalls dargestellt in Figur 8 ist eine Motorwelle 18, mit darauf befestigtem Anker 70 und Kommutator 72. Notwendige elektrische Verbindungen sind der Übersicht halber nicht eingezeichnet, verstehen sich aber von selbst. Die Welle 18 des Motors 20 wird über ein erstes Lager 74 im zweiten Gehäuseteil 54 und über ein entsprechendes Lager 76 im ersten Gehäuseteil 10, wie es beispielsweise auch in Figur 7 dargestellt ist, geführt.

Die Motorwelle 18 ragt über den ersten Gehäuseteil 10 hinaus und wird über eine Federscheibe 78 und eine Anlaufscheibe 80 mit einem Gebläselüfter 82 verbunden.

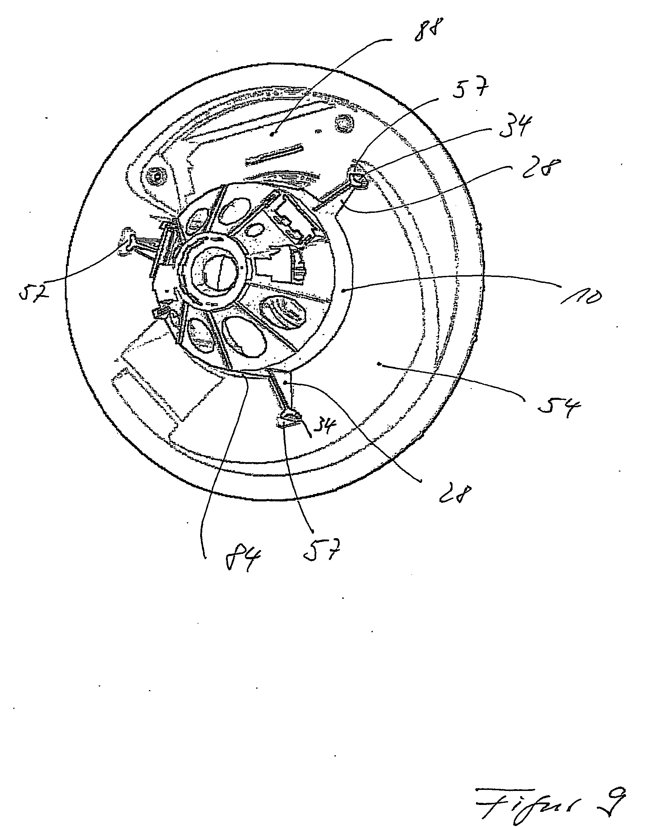

Figur 9 zeigt die zusammengesetzten Gehäuseteile 10 und 54, wobei in der gezeigten Darstellung kein Elektromotor in das Gehäuse eingesetzt ist. Der erste Gehäuseteil 10 greift in eine zentrale Ausnehmung 84 des zweiten Gehäuseteils 54 ein und wird dabei in seiner axialen Endlage teilweise vom zweiten Gehäuseteil 54 umfangen. Diese zentrale Ausnehmung 84 ist in ihrem Durchmesser so gewählt, dass der erste Gehäuseteil 10 der Vorrichtung 12 in dieser zentralen Ausnehmung 84 noch beweglich ist. Die Kunststoffspeichen 28 am Umfang 26 des ersten Gehäuseteils 10 fluchten in entsprechende Ausnehmungen 57 des zweiten Gehäuseteils 54. Diese Ausnehmungen 57 des zweiten Gehäuseteils 54 sind in axialer Richtung, das heisst in Richtung der Motorwelle konisch zulaufend, so dass bei eingefügtem erstem Gehäuseteil 10, die Kunststoffspeichen 28 an ihrem unteren, dass heisst dem zweiten Gehäuseteil 54 zugewandten Ende 46 in die Ausnehmungen 57 verklemmt werden.

Der zweite Gehäuseteil 545 ist als Motorflansch ausgebildet und kann über entsprechende, in Figur 9 nicht sichtbare, Befestigungselemente mit einem Trägerelement, beispielsweise einer Fahrzeugkarosserie verbunden werden. Auf dem zweiten Gehäuseteil 54 ist, in dem in Figur 9 dargestellten Ausführungsbeispiel, eine weitere Ausnehmung 88 für ein Steuerelement des Elektromotors 20 der erfindungsgemäßen Vorrichtung 12 vorgesehen.

Die erfindungsgemäße Vorrichtung ist nicht auf die in der Beschreibung vorgestellte Ausführungsbeispiele begrenzt.

So ist die erfindungsgemäße Vorrichtung nicht nur für die Verwendung bei Gebläsemotoren geeignet, sondern kann für alle Arten von Elektromotoren und elektrischen Maschinen verwendet werden.

Auch können selbstverständlich andere, als die in den Ausführungsbeispielen dargestellten zweisegmentigen Permanentmagnet Elektromotoren in der erfindungsgemäßen Vorrichtung verwendet werden.

Auch lässt sich die Verbindung der Kunststoffspeichen mit dem ersten Gehäuseteil der erfindungsgemäßen Vorrichtung sowie die Verbindung der Dämpfungselemente an den radialen Enden der Speichen mit diesen auch auf andere, dem Fachmann bekannte Arten realisieren.

Die Form der erfindungsgemäßen Kunststoffspeichen kann von den in den Ausführungsbeispielen gezeigten Möglichkeiten abweichen ohne aus dem beanspruchten Schutzumfang herauszufallen.

Im Speziellen sind Kunststoffspeichen für die erfindungsgemäße Vorrichtung denkbar, die an Ihrem radialen Ende keine weiteren Dämpfungselemente aufweisen.

Die Verbindungsmittel der Kunststoffspeichen mit weiteren Gehäuseteilen der erfindungsgemäßen Vorrichtung ist nicht auf die Verwendung der vorgestellten Zapfen beschränkt. Andere Verbindungsmöglichkeiten können an dieser Stelle selbstverständlich auch eingesetzt werden.

## Patentansprüche

1. Vorrichtung zur schwingungsisolierenden Halterung eines Elektromotors (20), insbesondere eines Gebläsomotors, mit einem ersten Gehäuseteil (10), welches zumindest einen Polring (22) und Magnete (24) des Elektromotors (20) umschließt und zumindest eine Öffnung (14,16) aufweist, durch die die Welle (18) des Motors (20) greift, und mit einem zweiten Gehäuseteil (54), welches als Motorflansch zur Befestigung des Elektromotors (20) an einem Trägerelement, beispielsweise einer Kfz-Heizungs- und/oder Klimaanlage, ausgebildet ist und das erste Gehäuseteil (10) in axialer Richtung der Motorwelle (18) zumindest teilweise umgreift, wobei am ausseren Umfang (26) des ersten Gehäuseteils (10) eine Mehrzahl von in radialer Richtung verlaufenden, flächigen Kunststoffspeichen (28) vorgesehen sind, die in zugehörige, in radialer und axialer Richtung verlaufende Ausnehmungen (57) des zweiten Gehäuseteils (54) eingreifen, und im Bereich ihres radial äussercn Endes (32) Verbindungsmittel (36) zur Befestigung am zweiten Gehäuseteil (54) aufweisen, **dadurch gekennzeichnet, dass** die Kunststoffspeichen (28) im Wesentlichen trapezförmig ausgeformt sind, vorzugsweise derart, dass mit zunehmendem radialen Abstand vom Motor (20) die axiale Ausdehnung der Speichen (28) kleiner wird, und dass sie in ihrer Querrichtung, d.h. in der axialen Richtung der Motorwelle (18) weich sind, so das torsionale Drehmoment-Impulse des Motors (20) gedämpft werden und vom zweiten Gehäuseteil (54) entkoppelt sind.

2. Vorrichtung nach Anspruch 1, **dadurch gekennzeichnet, dass** das erste Gehäuseteil (10) und das zweite Gehäuseteil (54) aus Kunststoff bestehen.

3. Vorrichtung nach Anspruch 2, **dadurch gekennzeichnet, dass** die Kunststoftspeichen (28) einstückig mit dem ersten Gehäuseteil (10) ausgebildet sind.

4. Vorrichtung nach einem der vorhergehenden Ansprüche, **dadurch gekennzeichnet, dass** die Anzahl der am ersten Gehäuseteil (10) vorgesehenen Kunststoffspeichen (28) bei mindestens drei und vorzugsweise im Bereich von drei bis sechs liegt.

5. Vorrichtung nach einem der Ansprüche 1 bis 4, **dadurch gekennzeichnet, dass** die Kunststoffspeichen (28) jeweils an ihrem dem Motors (20) abgewandten, radialen Ende (32) zusätzliche Dämpfungselemente (34) aufweisen, die im Wesentlichen rechtwinklig zur radialen Richtung der Kunststoffspeichen (28) stehen.

6. Vorrichtung nach Anspruch 5, **dadurch gekennzeichnet, dass** die zusätzlichen Dämpfungselemente (34) an den Enden der Kunststoffspeichen (28) ebenfalls ans Kunststoff bestehen und einstückig mit den Kunststoffspeichen (28) ausgeformt sind.

7. Vorrichtung nach Anspruch 6, **dadurch gekennzeichnet, dass** die zusätzlichen Dämpfungselemente (34) zumindest über die gesamte axiale Länge des motorabgewandten, radialen Endes (32) der Kunststoffspeichen (28) verlaufen.

8. Vorrichtung nach einem der Ansprüche 5 bis 7, **dadurch gekennzeichnet, dass** die zusätzlichen Dämpfungselemente (34) jeweils an ihrem, dem zweiten Gehäuseteil (54) zugewandten axialen Ende zumindest ein in axialer Richtung verlaufendes Verbindungsmittel (36), insbesondere zumindest einen Zapfen (44) besitzen, der in eine entsprechend ausgeformte Vertiefung in der Ausnehmung (57) des zweiten Gehäuseteils (54) eingreift.

9. Vorrichtung nach Anspruch 8 **dadurch gekennzeichnet, dass** die axialen Verbindungsmittel (36), insbesondere die Zapfen (44) der zusätzlichen Dämpfungselemente (34) mit dem zweiten Gehäuseteil (54) fest verbunden, insbesondere vernietet sind.

10. Vorrichtung nach einem der Ansprüche 5 bis 9, **dadurch gekennzeichnet, dass** die zusätzlichen Dampfungselemente (34) zumindest teilweise von Gummielemente (48) ungriffen sind, die zwischen dem Dämpfungselement (34) der Kunstoffspeichen (28) des ersten Gehäuseteils (10) und der Wandung der zugehörigen Ausnehmung (57) im zweiten Gehäuseteil (54) zu liegen kommen.

11. Vorrichtung nach einem der vorhergehenden Ansprüche, **dadurch gekennzeichnet, dass** die Ausnehmungen (57) des zweiten Gehäuseteils (54) zur Aufnahme der Kunststoffspeichen (28) des ersten Gehäuseteils (10) in axialer Richtung konisch zulaufen, so dass, die Kunststoffspeichen (28) nach axialem Zusammenfügen der beiden Gehäuseteile (10,54) in die zugehörigen Ausnehmungen (57) teilweise verklemmt sind.

## Claims

1. Apparatus for mounting an electric motor (20), in particular a fan motor, in a vibration-isolated manner, having a first housing part (10) which surrounds at least one pole ring (22) and magnets (24) of the electric motor (20) and has at least one opening (14, 16) through which the shaft (18) of the motor (20) passes, and having a second housing part (54) which is in the form of a motor flange for securing the electric motor (20) to a support element, for example a motor vehicle heating and/or air-conditioning system, and at least partially surrounds the first housing part (10) in the axial direction of the motor shaft (18), with a plurality of flat plastic spokes (28) which run in the radial direction being provided on the outer circumference (26) of the first housing part (10) and engaging in associated recesses (57) in the second housing part (54), which recesses run in the radial and axial direction, and having, in the region of their radially outer end (32), connecting means (36) for being secured to the second housing part (54), **characterized in that** the plastic spokes (28) are of a substantially trapezoidal form, preferably in such a way that the axial extent of the spokes (28) reduces as the radial distance from the motor (20) increases, and that they are flexible in their transverse direction, that is to say in the axial direction of the motor shaft (18), and therefore torsional torque pulses of the motor (20) are damped and decoupled from the second housing part (54).

2. Apparatus according to Claim 1, **characterized in that** the first housing part (10) and the second housing part (54) are composed of plastic.

3. Apparatus according to Claim 2, **characterized in that** the plastic spokes (28) are integrally formed with the first housing part (10).

4. Apparatus according to one of the preceding claims, **characterized in that** the number of plastic spokes (28) which is provided on the first housing part (10) is at least three, and preferably in the range of from three to six.

5. Apparatus according to one of Claims 1 to 4, **characterized in that** the plastic spokes (28) each have, at their radial end (32) which is averted from the motor (20), additional damping elements (34) which project substantially perpendicular to the radial direction of the plastic spokes (28).

6. Apparatus according to Claim 5, **characterized in that** the additional damping elements (34) at the ends of the plastic spokes (28) are likewise composed of plastic and are integrally formed with the plastic spokes (28).

7. Apparatus according to Claim 6, **characterized in that** the additional damping elements (34) run at least over the entire axial length of the radial end (32) of the plastic spokes (28) which is averted from the motor.

8. Apparatus according to one of Claims 5 to 7, **characterized in that** the additional damping elements (34) each have, at their axial end which faces the second housing part (54), at least one connecting means (36), in particular at least one pin (44), which runs in the axial direction and engages in a correspondingly formed depression in the recess (57) in the second housing part (54).

9. Apparatus according to Claim 8, **characterized in that** the axial connecting means (36), in particular the pins (44) of the additional damping elements (34), are firmly connected, in particular riveted, to the second housing part (54).

10. Apparatus according to one of Claims 5 to 9, **characterized in that** the additional damping elements (34) are at least partially surrounded by rubber elements (48) which come to rest between the damping element (34) of the plastic spokes (28) of the first housing part (10) and the wall of the associated recess (57) in the second housing part (54).

11. Apparatus according to one of the preceding claims, **characterized in that** the recesses (57) in the second housing part (54) for receiving the plastic spokes (28) of the first housing part (10) taper conically in the axial direction, and therefore the plastic spokes (28) are partially trapped in the associated recesses (57) after the two housing parts (10, 54) are axially joined.

## Revendications

1. Dispositif de fixation antivibratile d'un moteur électrique (20), en particulier d'un moteur de soufflante, comprenant une première partie de boîtier (10) qui entoure au moins une bague polaire (22) et des aimants (24) du moteur électrique (20) et qui présente au moins une ouverture (14, 16), à travers laquelle l'arbre (18) du moteur (20) vient en prise, et comprenant une deuxième partie de boîtier (54) qui est réalisée sous forme de bride de moteur pour la fixation du moteur électrique (20) sur un élément de support, par exemple une installation de chauffage et/ou de climatisation du véhicule automobile, et qui vient en prise au moins en partie autour de la première partie de boîtier (10) dans la direction axiale de l'arbre de moteur (18), une pluralité de rayons en plastique (28) plats, s'étendant dans la direction radiale, étant prévus sur la périphérie extérieure (26) de la première partie de boîtier (10), lesquels viennent en prise dans des évidements associés (57), s'étendant dans la direction radiale et axiale, de la deuxième partie de boîtier (54) et présentent dans la région de leur extrémité radialement extérieure (32) des moyens de connexion (36) pour la fixation à la deuxième partie de boîtier (54), **caractérisé en ce que** les rayons en plastique (28) ont essentiellement une forme trapézoïdale, de préférence de telle sorte que plus la distance radiale du moteur (20) augmente, plus l'étendue axiale des rayons (28) diminue, et **en ce qu'**ils sont souples dans leur direction transversale, c'est-à-dire dans la direction axiale de l'arbre de moteur (18), de sorte que des impulsions de couples torsionnelles du moteur (20) soient amorties et soient désaccouplées de la deuxième partie de boîtier (54).

2. Dispositif selon la revendication 1, **caractérisé en ce que** la première partie de boîtier (10) et la deuxième partie de boîtier (54) se composent de plastique.

3. Dispositif selon la revendication 2, **caractérisé en ce que** les rayons en plastique (28) sont réalisés d'une seule pièce avec la première partie de boîtier (10).

4. Dispositif selon l'une quelconque des revendications précédentes, **caractérisé en ce que** le nombre des rayons en plastique (28) prévus sur la première partie de boîtier (10) est d'au moins trois et de préférence est compris entre trois et six.

5. Dispositif selon l'une quelconque des revendications 1 à 4, **caractérisé en ce que** les rayons en plastique (28) présentent à chaque fois, à leur extrémité radiale (32) opposée au moteur (20), des éléments d'amortissement supplémentaires (34) qui sont essentiellement à angle droit par rapport à la direction radiale des rayons en plastique (28).

6. Dispositif selon la revendication 5, **caractérisé en ce que** les éléments d'amortissement supplémentaires (34) aux extrémités des rayons en plastique (28) se composent également de plastique et sont formés d'une seule pièce avec les rayons en plastique (28).

7. Dispositif selon la revendication 6, **caractérisé en ce que** les éléments d'amortissement supplémentaires (34) s'étendent au moins sur toute la longueur axiale de l'extrémité radiale (32) opposée au moteur des rayons en plastique (28).

8. Dispositif selon l'une quelconque des revendications 5 à 7, **caractérisé en ce que** les éléments d'amortissement supplémentaires (34) possèdent à chaque fois à leur extrémité axiale tournée vers la deuxième partie de boîtier (54) au moins un moyen de connexion (36) s'étendant dans la direction axiale, en particulier au moins un tourillon (44), qui vient en prise dans un renfoncement de forme correspondante dans l'évidement (57) de la deuxième partie de boîtier (54).

9. Dispositif selon la revendication 8, **caractérisé en ce que** les moyens de connexion axiaux (36), en particulier les tourillons (44) des éléments d'amortissement supplémentaires (34) sont connectés fixement à la deuxième partie de boîtier (54), notamment par rivetage.

10. Dispositif selon l'une quelconque des revendications 5 à 9, **caractérisé en ce que** les éléments d'amortissement supplémentaires (34) sont saisis sur leur périphérie au moins en partie par des éléments en caoutchouc (48), qui viennent se placer entre l'élément d'amortissement (34) des rayons en plastique (28) de la première partie de boîtier (10) et la paroi de l'évidement associé (57) dans la deuxième partie de boîtier (54).

11. Dispositif selon l'une quelconque des revendications précédentes, **caractérisé en ce que** les évidements (57) de la deuxième partie de boîtier (54) convergent de manière conique dans la direction axiale pour recevoir les rayons en plastique (28) de la première partie de boîtier (10), de sorte que les rayons en plastique (28) soient en partie coincés dans les évidements associés (57) par assemblage axial des deux parties de boîtier (10, 54).
